# EUROPEAN PATENT APPLICATION

(11) **EP 2 016 820 A2**
(43) Date of publication of application: **21.01.2009**
(21) Application number: 08425483.8
(22) Date of filing: 16.07.2008
(51) Int. Cl.: A01G 9/02

(54) **Container for protected horti-floriculture by the soilles technique with thermal conditioning of the culture substrates**

(30) Priority: 17.07.2007 IT RM20070397
(71) Applicant: Cornaglia Sud S.r.l., 66041 Piazzano di Atessa (IT)
(72) Inventor: Bonfitto, Emanuele, 67051 Avezzano (AQ) (IT); Cianfarra, Rita A.R.S.S.A., 66034 Lanciano (CH) (IT); Giangiulio, Camillo A.R.S.S.A., 66034 Lanciano (CH) (IT)
(74) Representative: Banchetti, Marina

(57) **Abstract**

The invention concerns a pot (1) or a container of another shape suitable for the cultivation of a horti-floricultural species grown with the "soilless" technique, provided with an external jacket-shaped air-gap (2) for the forced circulation of a thermal carrier fluid for the thermal conditioning of the substrate and of the roots apparatus contained therein. The jacket-shaped air-gap (2) is provided with two passage holes with a sleeve insert (5) for the inlet and the outlet of the thermal carrier fluid and with a flow deflection baffle (7) in front of each one of the two inlet and outlet holes. The pot (1) also comprises preferably two longitudinal baffle (10) dividing the jacket-shaped air-gap (2) in two sectors, and two or more longitudinal stiffening grooves (11) around the internal wall (3).

The device is capable of maintaining the substrate and the roots apparatus of a "soilless" culture within optimal temperature ranges, while maintaining a localized microclimate around the plant and allowing to limit the temperature of the whole greenhouse internal volume, thereby resulting in an energy saving.

## Description

The present invention concerns a container for protected horti-floriculture by the soilless technique with thermal conditioning of the culture substrates. More specifically, the invention concerns a pot or container of any other shape suitable for the culture of a horticultural or floricultural species grown according to the "soilless" method, which is provided with an external air space for the forced circulation of a thermal carrier fluid for the thermal conditioning of the substrate and of the root system contained therein. The container, which has synthetically been called "B.C.G. pot" from the initials of the last names of the instant inventors, is capable of maintaining the substrate and the roots system within the temperature ranges optimal for the desired culture.

As it is known, the "protected" cultures are those cultures for which, through different means, a more or less thorough conditioning of the climate is carried out, such conditioning involving either the whole plant cycle or a part thereof. Such conditioning becomes necessary when it is desired to grow plants originating from zones having a very different climate from the local one and that could only be grown outdoors for short period of the year or plants having normal culture requirements outdoors, but of which it is desired to obtain the ripening of the product (and therefore the production) more o less in advance or delayed in respect to the normal ripening period. In addition such conditioning becomes necessary for floriculture species, when It is desired to obtain better quality features.

Forced and semi-forced cultivations in greenhouse differ from outdoors cultivations in that the activities carried out in connection with their culture are not only directed to the plant and to the soil, but also to the climatic environment, operating in such a way as to modify such environment with respect to the natural external conditions ("air conditioning" operations). This is made not only for the purpose of avoiding that such environment may result in damages to the plants - as it may easily happen when out of season culture are carried out - but overall in order to have an environment which is the most favourable, with the respect to the development stage and the productive aims of the cultures, to obtain a better production in term of quality and quantity, and in advance or delayed in respect of the normal season of production,

Therefore, the protected cultures are intended to achieve aims such as the advanced production, the delayed production or the complete productive displacement with respect to the normal growing seasons. This normally results in the possibility to market the products at higher prices with respect to the outdoors productions. On the other hand, the conditioning of the development cycle of the various cultured species involves an operational cost, that is mostly due to the thermal conditioning (heating/cooling) of the greenhouse environment.

The protected cultures are advantageously carried out with cultural techniques which are alternative to the conventional ones, among which firstly, the soil-less techniques.

The "soilless" culture, better known as "hydroponic culture", is the cultivation of vegetables, flowers, and plant nursery products without natural soil containing silt or clay, but with the use of nutrient solutions containing mineral elements (macro-elements or micro-elements), which are preferably fed through an automated fertilization and irrigation system. The first applications of the "soilless" culture with a commercial aim occurred in the United States and dated back to 1930, while in Europe this technique is developed, specifically for the production of fresh vegetables, starting from the seventies in the northern European countries. Later, simplified and more reliable and cheaper techniques where developed, the "soilless" technique grew and spread out also in the Mediterranean area, particularly in Spain and in Italy.

The most widespread types of soilless culture (or hydroponics) are the culture without a solid medium (solution culture) and the culture using a solid medium or substrate, which has a substantially mechanical function, as a support for the root system of the plant (medium culture). In the first case the nutrient solution may flow within shallow channels (housing the culture roots) suitably sloped, placed in rows in the greenhouse where the culture is carried out (nutrient film technique, NFT). In alternative, the nutrient solution may flow on a slightly sloped waterproofed bench, having a sufficiently high containment rim, where a constant level of the nutrient solution is maintained and the cultured plants housings are placed (circulating flow technique, DFT). In alternative, the soilless culture without medium may be "aeroponic", characterized by suspended plants with the roots exposed but shielded from the light, which are fed nebulizing the nutrient solution directly on the roots.

The soilless cultures using a solid medium may differ in the subrates employed, which may have an organic origin, natural or treated, such as peat, bark, vegetal fibers, algae or such as pressed vegetal fibers, or may have an inorganic origin, natural or treated such as sand, gravel, rock wool, perlite, expanded clay and vermiculite or a synthetic origin such as polyurethane, expanded polystyrene and other expanded polymeric materials. The said cultures may also differ in the features of the containers used, the most widespread of which being bags of thermoplastic material (generally polyethylene) and pots or cylindrical containers or, preferably, frustoconical containers slightly tapered toward the bottom, made of plastics as well, normally polyethylene.

The soilless cultures employing a substrate may be fed with the nutrient solution in several different ways, in particular with dropwise sprinklers from the top, with a passive subirrigation wherein the nutrient solution is absorbed by the roots from the bottom, being the culture placed on a tray or a shallow bench constantly fed with the nutrient solution, or else with subirrigation systems commonly known as "ebb and flow" (or "flood and drain") systems wherein at regular intervals the tray or bench housing the culture is filled with nutrient solution, which is then allowed to drain.

The soilless technique does not take into account the agronomic history of the land, its natural endowment of nutrients, the cultural turnover followed (which is conventionally done in order to return to the soil the amounts of nutrients removed, so as to maintain its fertility in time), but only takes into account the nutrients supplies and the possibility of a flexible management of the plants nutrition. As it may be inferred from the foregoing, the soilless technique involves and considerable number of advantages, some of which are referred to the relevant productions. Some of these advantages are:
- homogeneity, healthiness and constancy of the product quality;
- superior organoleptic and aesthetical features of the product;
- presence, in the said product, of particular components (e.g. natural antioxidants in the vegetables).

Further non negligible advantages are connected to the possibility of producing through a technique that sets free the production from the soil and from any problem connected therewith (this because in the latest years the health status of the cultured lands is becoming more serious, as are the pathologies transmitted through said lands). This allows to obtain in all cases good yielding and qualitative performances of the productive installations, with reduced consumptions of water and plant protection products, as well as limited and less hard labour interventions.

One of the factors (besides sun radiation, temperature, nutrients supply, etc.) capable of influencing the rooting and development of the cultured species is the working temperature of the roots systems. When said temperature is comprised within a range considered optimal generally between from 15°C to 20°C (as reported in the literature of this field), it is possible to appreciate the consequences of that both in terms of advance/delay/displacement of the productive season and in terms of quality of the product.

In spite of these many advantages, the hydroponics production technique does not influence at all the actual working thermal needs of the cultured species. Said thermal needs are still a critical element owing to the high energy costs involved, which are often too heavy to be borne by the agricultural farms.

As a matter of fact, the optimal thermal conditions within a protective structure such as a greenhouse are obtained by means of different methods, either through the conditioning of the entire environment, or through a localised conditioning, which involves placing the culture containers into heated channels or on heated benches (basal heating).

In the first mentioned case (which, however, is not exclusively directed to heating the culture medium) the temperatures achieved in the culture medium and roots, in the most optimistic hypothesis, tend to reach the greenhouse temperature (as in the case of a body immersed in an environment having infinite thermal capacity, subordinate to the features of radiation absorption and back radiation from the same body). The latter however could be insufficient with respect to the optimal working temperatures of the roots systems. In addition, it should be noticed that this system involves huge energetic expenditure when the thermal conditioning of small size species is concerned, or in the first stages of plant development, as the thermal conditioning of the whole greenhouse is required.

In the second case, results of a greater interest than in the first case are possible, both from the point of view of agronomic efficiency, or from the point of view of energetic expenditure. In this case by the use of heated channels or benches, the bases of the pots containing the substrate and the roots are made to absorb heat from heated piping on which the bases are placed (apart from a small heat amount which, rising by convection with the ascending air flow close to the pot, is exchanged with the lateral surfaces of the same).

In general, in a air conditioned greenhouse also having a basal heating system, the thermal power reserved to the latter represents about the 25% of the total thermal power of the whole greenhouse requirement.

An example of a solution useful for the thermal conditioning of soilless cultures wherein a system similar to the basal heating referred to above is applied is disclosed in the international patent application No. WO 83/01365 (Tucker et al.). The latter concerns in a container or tray for growing sprouts from seeds hydroponically, with a thermo-regulating apparatus consisting of tubular elements placed in the lower part of the tray, wherein the thermal conditioning is realised by means of electric wires or by means of a thermal carrier fluid, which may be employed both for heating and for cooling.

Another similar example in the French patent application published with No. 2607355 (Thermisol S.A.R.L.), disclosing a tray container structure for soilless cultures wherein the tray is provided with a heating device in the doubled-walled bottom. The device is realised with electrical wires or coils for the flow of a thermal carrier fluid.

It is clear that the two above solutions represent arrangements suitable, at most, for small scale horti-floriculture or for hobby floriculture, as they employ thermal conditioning means poorly suitable for farms or industrial scale productive plants. In the solution with electrical heaters, in addition, the thermal conditioning for cooling is not provided for.

A solution specifically designed for carrying out basal conditioning in protected cultures according to the soilless technique is disclosed in the patent DD 269081 of the former DDR (Institut für Energie- und Transportforschung Meißen-Rostock), which concerns case-like containers having parallelepipedal shape or frustoconical shape tapered toward the bottom. The latter are designed so as to coupled into close contact with lower closed channels having a parallelepipedal shape wherein a thermal carrier fluid flows. The channels are almost fixedly coupled to the case-like containers holding the cultures, so that the surface through which the thermal exchange occurs is maximised. Notwithstanding the fact that the contact surface between the heating channels and the bottom of the containers or cases housing the cultured plants is higher than in the case of basal heating realised with the simply placing the containers on benches heated through piping systems, the arrangement disclosed still does not afford an optimization of the heath exchange to the benefit of the culture medium. Actually, the heath source is still placed below the container, and it is kept separate from it.

In the light of the foregoing, and considering the importance that the culture medium temperature has for the growth performance and the growing times of the plants in periods of the year that are poorly favourable to development of the plants, an object of the present invention is to provide a thermal conditioning system for the cultured medium for growing vegetable crops and floriculture crops in a protected environment with the "soilless" technique, showing an optimal performance both in terms of maintaining the temperatures most suitable fro the roots apparatuses of the cultured species, and in terms of remarkable reduction of the overall cost of conditioning of the protected environment.

To that aim there is proposed, according to the present invention, to provide each one of the pots or containers that normally houses the substrate of a soilless cultured where the roots grow of an air tight air gap, or jacket enclosing the whole exterior surface of the container or most of it, which jacket is provided with inlet or outlet joints for the circulation therein of the thermal carrier fluid. The said jacket, being an integral part of the container - which is preferably made of a plastic material - and extending around the whole container surface, is capable of maximising the thermal exchange between the thermal carrier fluid (be it a heating or a cooling fluid) the culture medium housed in the container. In addition, the system operation may be adjusted and controlled more efficiently as regards its effects on the hydroponic cultures treated, thanks to the close contact between the thermal conditioning element and the culture medium.

The proposed system, while using elements that are inexpensive from the point of view of production costs, allows to optimize the energetic expenditure due to the air conditioning of the protected environment also when compared to other localized conditioning systems, since the heat transfer toward the exterior from the jacket container according to the invention results in creating a localized microclimate in the surroundings of the plants. This allows to reduce the temperature of the whole internal greenhouse volume, as such temperature is no more so strongly limiting for the culture conditions.

Therefore the present invention specifically provides a container for protected horti-floriculture according to the "soilless" technique having a shape which is cylindrical, prismatic, frusto-pyramidal or frusto-conical tapered toward the bottom, made of a material opaque to light and comprising a jacket-shaped air-gap extending around the external surface of the container, air-tight closed and provided with passage holes for the inlet and outlet of a thermal carrier fluid for the thermal conditioning of a culture medium housed in the said container, one or more holes passing through said jacket-shaped air gap being provided at the bottom of the container for the drainage or the absorption of water or nutrient solution to or from the exterior of the container.

According to a preferred embodiment of the invention, said passage holes for the inlet and outlet of the thermal carrier fluid are two, in diametrically opposite positions close to the upper edge of the external wall of the said container. Through said holes, that are generally placed close to the top of the container, heating or cooling fluid enters the jacket-shaped air-gap the internal wall of which is in contact with the culture medium. The said heating or cooling fluid is preferably water or any other fluid suitable to the temperature ranges of interest, such as, for instance a diathermal oil or an organic liquid such as polyethylene glycol.

The jacket-shaped container according to the invention may be advantageously made of a thermoplastic polymeric material, preferably high density linear polyethylene, but other polymeric materials may be suitable as well. Among the latter, for instance, other kinds of polyethylene, PVC (polyvinylchloride), polystyrene, ABS (acrylonitrile-butadiene-styrene), polypropylene. The plastic material employed may also contain as additives particular powders working as pigments and/or to confer particular characteristics on the material, such as for instance, manganese dioxide to confer on the polymer a better durability and resistance to ultraviolet radiations. It is also possible to use, although with less practical and economical advantages, metallic materials or composite alloys, or non-metallic materials such as cemented powders, gres or terra-cotta, while avoiding, however, those material having thermal insulating properties, or that do not have suitable mechanical characteristics.

Preferably, each one of said passage holes for the inlet and outlet of a thermal carrier fluid is provided with a cylindrical sleeve insert made of metallic material, fixedly embedded in the polymeric material of the said container. According to some preferred solutions said cylindrical sleeve is made of copper or brass, and is internally threaded. In any case other connection types for fluid piping are also possible in addition to threaded joints, such as, for instance, pressure joints with snap-on clip, or smooth sleeves for attrition insert of flexible tubes, provided with hose clamps. Other materials are also possible for the same joints, such as iron alloys or also polymeric materials.

According to a preferred embodiment of the invention, the proposed container consists of a pot having a frusto-conical shape tapered toward the bottom, having a similar shape to the normal plastic pots for use in horti-floriculture, but provided with a jacket-shaped air-gap around the whole surface thereof, for the circulation of a thermal carrier fluid.

Preferably, as it will be clearer with reference to the drawings presented in the following, said jacket-shaped air-gap is divided in two sectors by two baffles, which close longitudinally the port for the passage of the thermal carrier fluid within the said jacket-shaped air-gap, said baffles being placed in diametrically opposite positions around the external surface of the container and being equidistant from said two passage holes for the inlet and outlet of said thermal carrier fluid.

In addition, a particularly effective version of the proposed container comprises at a fixed position on the internal wall of said jacket-shaped air-gap, on the side facing the internal wall of said container and corresponding to each of said two passage holes for the inlet and outlet of the thermal carrier fluid, a flow deflection baffle having an edge with longitudinal position and transversally placed with respect to a fluid flowing through the said passage hole. Said element is provided in order to divide the flow of the thermal carrier fluid entering the jacket into two flows, embracing the internal wall of the air-gap from both sides, so as to enhance the thermal exchange.

Further, the container according to the invention may comprise two or more longitudinal stiffening grooves on the internal wall of the said container, placed at equidistant positions from each other around the internal wall of the container. Annular horizontal grooves may be optionally provided in the internal wall for a further stiffening.

As concerns the process for producing the container according to the invention, the preferred technology is rotational moulding. This is a technological process allowing to produce hollow bodies in one only piece with no need of welding, thereby obtaining products without internal stresses and with uniform thickness. Articles having big size and even very complex shape may be moulded, even with different surface finish and with different types of inserts moulded together. In addition, investment costs for the equipment are definitely lower than the costs required for other technologies.

The continuous research of new materials and technologies for the moulding increases each year the range of polymers that may be effectively used in the rotational moulding process. Presently, most of the production is carried out with linear or cross-linked polyethylene or with other thermoplastic polymers such as PVC, polypropylene, polyamide, polycarbonate.

The peculiarity of the rotational moulding technology lies in that the mould rotates about two axes: one, primary axis, having a fixed direction, and the other, the secondary axis, having a variable direction. During al phases, (excluding loading and unloading) the mould rotates continuously, but never too fast, and thanks to the two movements the polymer covers the whole internal surface of the mould. The internal surface, once heated, causes melting of the polymer, that adheres thereto completely covering it. In this way, layer after layer, all the polymer is melted, originating the final product. As the rotation is slow, the polymer does not cover the mould as a result of the centrifugal force generated by the rotation, but only because it is melted when it comes into contact with the internal surface of the mould.

Therefore, preferably, the container according to the invention is obtainable by rotational moulding from a thermoplastic polymeric material.

In the preferred case where the jacket-shaped container is obtained by rotational moulding it is also provided a hole on the external bottom wall of said jacket-shaped air-gap, said hole being provided with a cylindrical sleeve insert and air-tight closed with a cap. Said cap, normally closed, is necessary in the container production stage, in order to evacuate air and gas generated during the thermal forming process.

The specific features of the present invention, as well as its advantages and corresponding operating modalities, will be more evident with reference to the detailed description disclosed in the following merely by way of example, with reference to a specific embodiment of the proposed container and to the results of the experiments carried out utilising said container. Said features and experimental results are also shown in the attached drawings, wherein:
**Figure 1** is a transversal cross-sectional view , normally horizontal, of a preferred embodiment of the container according to the invention, consisting in a pot having frusto-conical shape tapered toward the bottom;
**Figure 2** is a first longitudinal cross-sectional view of the pot of Figure 1, taken along the line shown as Sec. 1 of Figure 1;
**Figure 3** is a second longitudinal cross-sectional view of the pot of Figure 1, taken along the line shown as Sec. 2 of Figure 1;
**Figure 4** is a third longitudinal cross-sectional view of the pot of Figure 1, taken along the line shown as Sec. 3 of Figure 1;
**Figure 5** is a fourth longitudinal cross-sectional view of the pot of Figure 1, taken along the line shown as Sec. 4 of Figure 1; and
**Figures 6** and **7** show graphs of the detected night temperature progress in the greenhouse and the culture microclimate respectively in two different dates; each of said graphs showing the detected temperature within the greenhouse, the temperature close to conventional pots heated by means of basal heating and the temperature close to jacket-shaped pots according to the invention, heated with water circulating at 33-40°C.

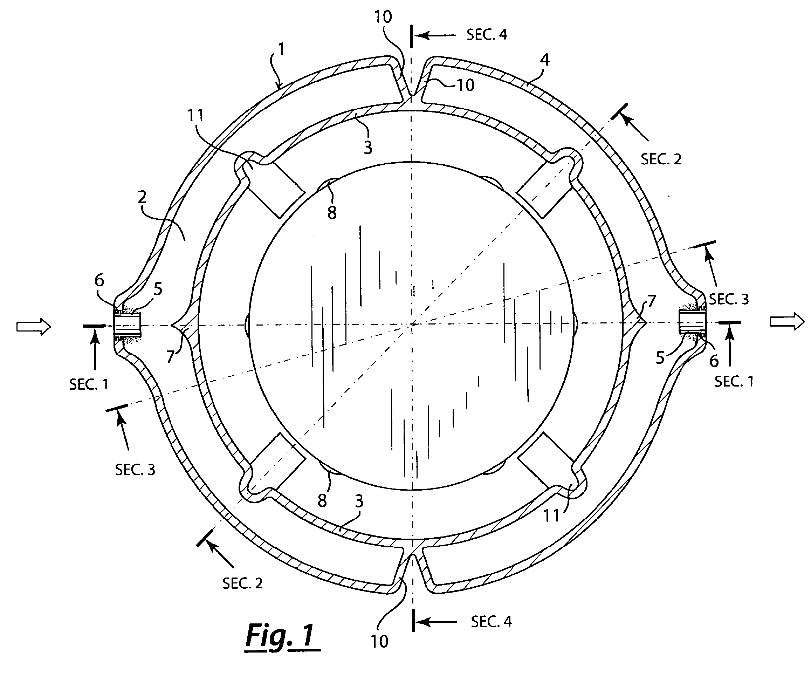

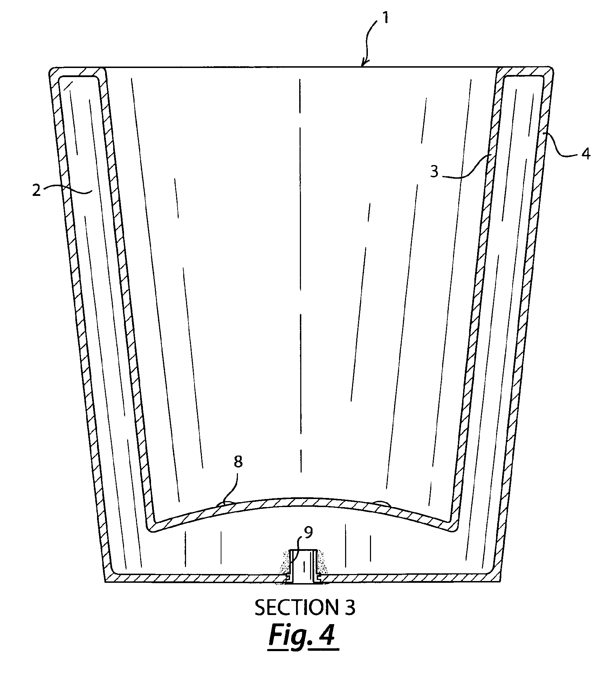

The device shown in **Figures 1-5** is a high density polyethylene pot for cultivation in greenhouse, realised according to the teaching of the invention, which has been called, as noted before, "B.C.G. pot". The pot (1) has an overturned frusto-conical shape, slightly tapered, having external size Ø 22 cm at the base, ∅ 28 cm on top, height h=28 cm; the innovative feature of the pot (1) lies in the provision of a jacket-shaped air-gap (2) for circulating a thermal carrier fluid, having an average thickness of 2 cm, while the thickness of its internal wall (3) and external wall (4) is 5-6 mm on average.

In the jacket-shaped air-gap (2) a water circulation is provided in order to transfer or remove heath with a high transfer efficiency from the culture substrate mass and roots of the cultured plants. Thanks to the quick response of the thermal exchange provided by the jacket-shaped air-gap (2) the pot (1) is capable of maintaining its contents in substantially isothermal conditions; at the same time it diffuses heath outside its external wall (4), thus contributing to the creation of a microclimate in the surrounding of the culture.

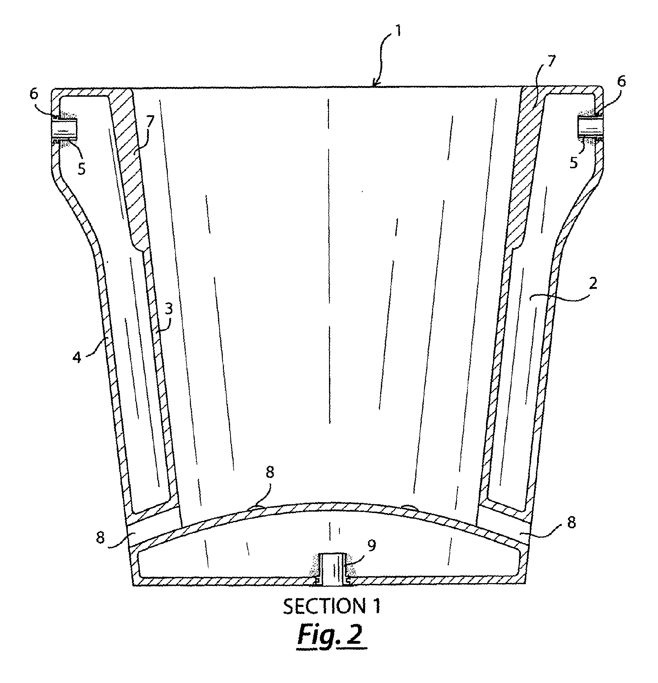

As it is shown in Figures 1 and 2, in a diametrically opposed position on the external wall (4) of the pot (1), in the upper part thereof, there are placed some inserts, consisting of cylindrical sleeves (5), internally threaded, embedded in an hexagonal ring nut (6). The latter has a thickness of 27 mm in plan view and has a groove in its thickness, in order to improve the sticking and the tightness between the insert and the polymeric resin of the external wall (4) of the pot (1). The sleeve (5) and the ring nut (6) are made of copper or brass, with a diameter 3/4" Gas, and are provided for the joint of a pipe for the inlet and outlet of the thermal conditioning fluid, having a diameter of 1/2" Gas. The hexagonal ring nut (6) is embedded in the external wall (4) a zero level or -1 mm, -2 mm (the corresponding gap being filled with the polymer material during the production process) and is about 1,6 cm deep, and protrudes, therefore, at the interior of the jacket-shaped air-gap (2) by about 1 cm. The ring nut (6) is wrapped by a resin deposit with an overturned slightly frusto-conical shape, which makes out an incremental tightness connection with the external wall (4).

In their application in greenhouse for soilless culture, the pots (1), placed in rows within a bench channel are fed through their own inlet and outlet joint, connected in series in groups of 6-8 in number, with maximum temperature fall of 4°C-5°C, respectively to feeding and collecting manifold pipes. In alternative, the pots (1) may be individually connected, in parallel, to the said pipes.

Still with reference to **Figures 1** and **2**, on the internal wall (3) facing the jacket-shaped air-gap (2) there is placed a flow deflection element (7) made of the same polymeric material of the pot (1), having a pseudo-triangular horizontal cross-section. The flow deflector (7) has a base in the wall (3) of about 30 mm and a thickness of 10 mm, its transversal cross-section has two sides shaped as a parabolic arch. The base side exactly matches the internal wall (3) and has a longitudinal extension of about 10 cm, along which the height of the said triangular section varies, decreasing from 10 mm at the top f the pot (1) to about 6 mm.

The flow deflector (7) has the corner facing the water jet coming in, in order to divide it in two flows; for this reason the water entrance wall is shaped as a moderately curve semi-cup and has a lateral surface as a vertical flat wall (in order to optionally connect the pots in series), so as to allow the connection of the water inlet and outlet joints. The same occurs on the water outlet side, albeit only for aesthetical symmetry reasons, and for additional stiffening of the inner wall.

The semi-cups referred to above allow to place, if desired, the water inlet and outlet joints also on the top, with the ring nuts (6) placed in the upper edge crown of the pot (1). The latter, having a useful width of 20 mm, would not allow the insertion of the ring nut (6) having 27 mm, if not actually exploiting the grater space created by the semi-cup shape in the area of the water inlet and outlet joints.

A variation having a mainly aesthetic feature of the upper edge of the pot may consist in the provision of an upper annular border strip, having the same height as the concerned semi-cups.

In the inner bottom of the pot (culture medium side), having the shape of a spherical segment with r = 24 cm, visible in **Figures 2-5**, six holes (8) with Ø 12 mm are placed, having the purpose of allowing water drainage in the event that the fertilization-irrigation occurs from the top, by means of drips connected to holding sticks that are fixed in the culture medium in the pot, or have the purpose of allowing the water inlet, in the event that the subirrigation technique in channels is adopted (i.e., the water is absorbed by the substrate and roots by capillarity).

As shown in Figures 2-5 the external bottom wall is provided with a hole with a cylindrical insert sleeve (9) made of copper or brass, threaded in the same way as the already disclosed sleeves, but having diameter 1/2" Gas, in communication with the jacket-shaped air-gap (2). Said sleeve is necessary in the production stage, in order evacuate air and gases generated in the forming thermal process by rotational moulding. The sleeve (9), however is closed by a threaded air-tight flat-head screw, in such a way that the jacket shaped air-gap (2) is in communication with the inlet and outlet holes for the thermal carrier fluid only through the sleeves (5).

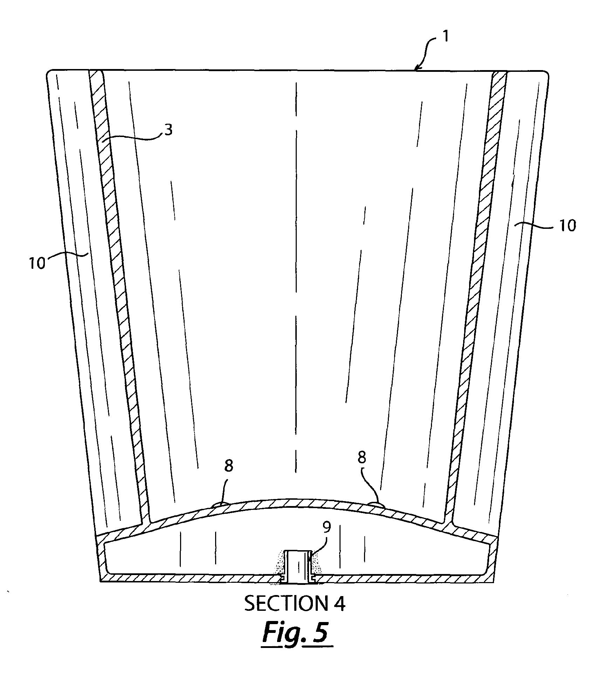

The jacket shaped air-gap (2) for water circulation is divided in two sectors through vertical longitudinal closing baffles (10), shown in **Figures 1** and **5**, having an omega-shaped cross-section with rounded-off corners, or a parabolic shape, the edges of which are connected with no interruption with the internal wall (3) of the pot (1). The jacket shaped air-gap (2) for water circulation is thus divided in two sectors or half-jackets such as to force the water entering therein, after the passage in the first half-jacket, to cross the bottom air-gap and rise back toward the outlet placed on the opposite side, crossing the second half-jacket and thus granting a practically total thermal exchange.

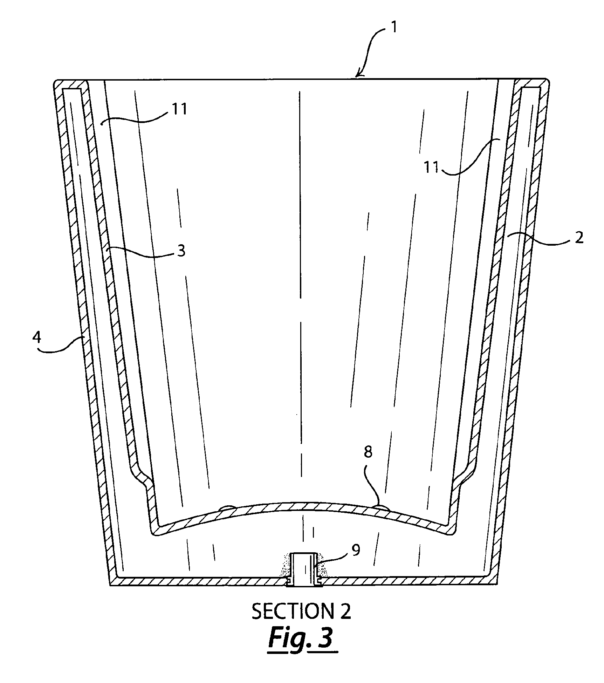

In addition, as it is shown in **Figures 1** and **3**, the inner wall (3) of the pot (1) is provided with four stiffening grooves (11) having an omega-shaped cross-section with rounded-off corners (although it may be also shaped as a circular or parabolic arch). Such grooves have the function of avoiding any deformation of the wall itself by swelling of the pot toward the interior, which may be caused by the pressure of the thermal carrier fluid. Similar deformation would force the culture medium to rise within the pot (1), with the possible discharge of the medium from the pot itself lacking a suitable gap.

As far as the mechanical resistance features are concerned, it should be noticed that at a inner pressure of 3 bar the pot undergoes swelling deformation of the walls, and for this reason the use with a pressure of about 0.5 bar is considered to be optimal. The exemplified container is also endowed with a remarkable resistance to ultraviolet radiation, since the polymer mixture used contain special powders having the function of assuring these features.

The volume of the jacket shaped air-gap (2) of the illustrated pot (1) is about 4.3 litres, while the useful volume for housing the culture medium is about 7.0 liters; finally the weight of the (empty) pot is 2.5 kg on average, while with the culture substrate (y of about 100 kg/m³) and the jacket completely filled with water, the overall weight amounts to 7.5 kg.

Finally, in the event that the solution alternative to the one illustrated above, with inlet and outlet of the thermal carrier fluid from the top, on the upper edge crown, is adopted, in the insert within the jacket for the fluid inlet a flow separator element may be placed, such as to divide the flow itself in two fractions, so that such flow may completely surround the inlet half-jacket.

As it may be inferred from the foregoing, the jacket container according to the invention affords the advantage of being able to set up, according to the needs, the culture substrates temperature which is optimal for the cultivated species, and to be able to activate, within the pot jacket, the circulation of the thermal carrier fluid suitable to adequate the thermal status of the substrate to the reference one.

As thermal carrier fluid water may be advantageously used, such water being heated by solar plants even at low o moderately low temperatures (25-40°C), or by means of fuel-fed heath generator. Contrary to the alternative of exchange with the greenhouse environment air, where the convection coefficient for stagnating air is about 8-10 W/m²°C, the convection coefficient of the water from the internal wall side - assimilable to pipes - and variable according to the thermal and fluidodynamic parameters regulating the mass and energy transfer - that is, for a generic fluid, the hydraulic motion-type - laminar or turbulent - the viscosity, density, speed, temperature, rugosity of the wall - is equal to about 1100-1600 W/m²°C on average or even more, depending on the value of the regulating exchange parameters mentioned above.

The foregoing, considering the thickness and thermal conductivity of the walls and the relevant exchange means (air from one side and, from the other side, the culture medium mixed with the same air which although in reduced form still exchanges heat with the outside) brings to a global exchange coefficient of about 8.5 W/m²°C. With a thermal gap of about 20°C-25°C for the exchange with the external environment and considering the surfaces exposed by about 0.26 m² (which value also comprises the surface of the culture medium exposed to air), the pot according to the invention in the mentioned conditions would have an overall thermal exchange of about 45 W-55 W.

Thanks to the high thermal exchange capacity of the jacket shaped pot, in addition, a quick restoring of the substrate temperature is obtained when this is sprayed with the fertilization-irrigation water. This condition requires, in the conventional systems, a very long time period for restoring the substrate temperature.

Even more remarkable, for the proposed system according to the invention, are the energetic savings due to the possibility to reduce the temperature of the whole conditioned environment, when sprouting plants in pot are concerned, even not small. Actually, in the environment surrounding the pot a microclimate is generated having features more or less uniform (and also relatively constant in time, given the great thermal inertia of the mass, the thermal carrier fluid being comprised in said mass).

This condition, when accompanied by a limited thermal addition by a modest heating system consisting of hot water pipes placed parallel to the pots benches at a suitable height - according to the plant growth development - allows to reach acceptable microclimatic conditions, surely cheaper with respect to the conditions implying the complete heating of the greenhouse such as it is conventionally obtained by having recourse to aero-thermal systems.

The generated microclimate condition is to be ascribed to the gratlyu limited mass exchange, and therefore energy exchange, between the confined layers and the greenhouse environment as a result of the existing low thermal gradient between the said layers, which is limited to some degrees Celsius.

The energy saving achievable is evident, where the volume of the whole greenhouse in conventional conditions (greenhouse T 15°C-17°C) is considered, there being possible to reach savings between 30% and 60% with respect to the aero-thermal system (from which the energy supplied to the pots, amounting to about 10%, is to be subtracted), according to the temperature of the general greenhouse environment, which may be reduced to 10°C-12°C depending on the microclimate that is created in the surroundings of the pots according to the invention.

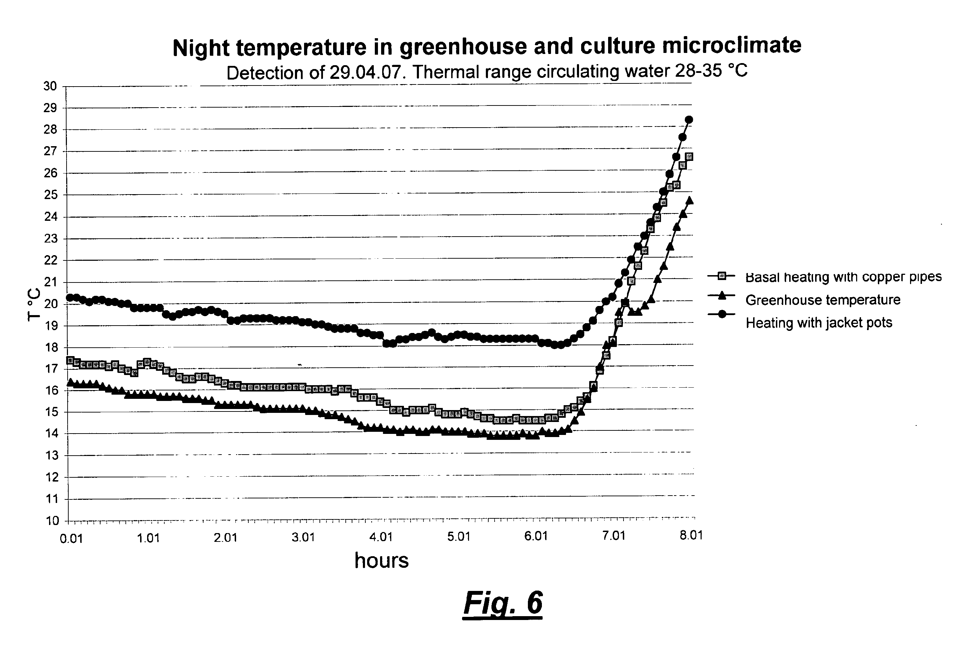

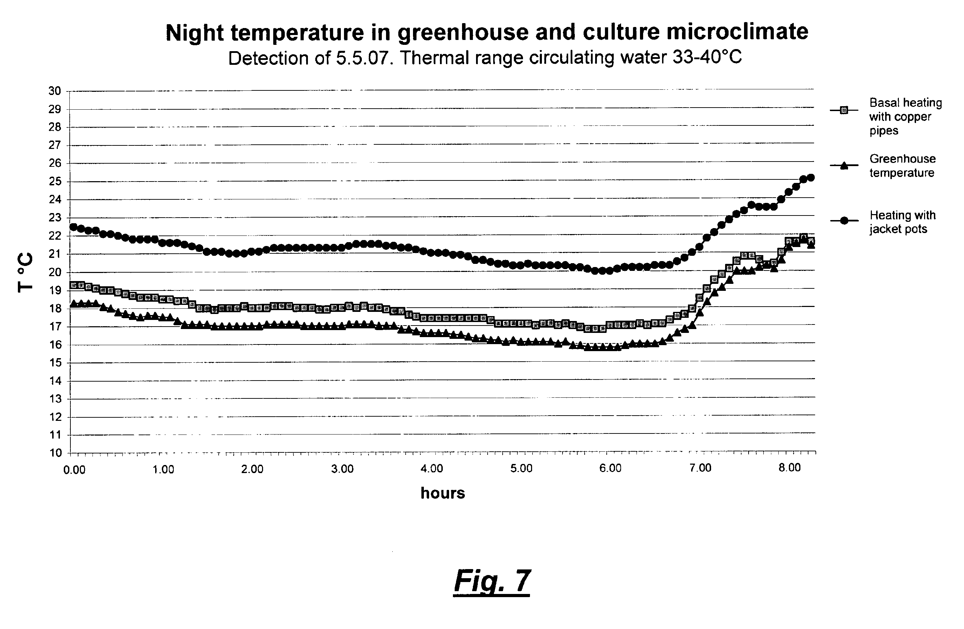

Said advantage is experimentally shown by the outcomes of a monitoring carried out in order to check the performance of the present invention, some the results of which are illustrated in Figures 6 and 7. Owing to the microclimate generated around the culture, when the jacket shaped container according to the invention are used, the detected temperature is about 4°C higher than the greenhouse temperature generally obtainable with the use of similar pots without a heating jacket. The result is advantageous also in comparison the basal heating technique with a thermal delta of about 3°C.

In addition, the jacket shaped pots according to the invention combined with lateral thermosiphon heaters would allow a further amplification of the mentioned thermal gap. All that results in the possibility of maintaining a general greenhouse climate in the range of 10°C-12°C instead of the conventional 15°C-17°C as required by the aero-thermal conditioning technique.

The foregoing obviously is modified in the case of cultures in pot having greater size (shrub plants or tree-like plants), but it does not substantially change, there being possible to operate a thermal reinforcement with an additional row of lateral thermosiphon devices.

A further advantage connected to the invention is the possibility to operate also in a cooling mode of the culture substrates. In a greenhouse, actually, substrates temperatures above 50°C may be reached as a result of the solar radiation. The cooling water may be taken from well or in alternative it may also be in closed cycle, cooled by means of a cooling tower, with a consumption limited to the only evaporated water to be restored.

Finally, as far as the cultural aspects are concerned, a further effect of the invention to be pointed out as, in addition to the production in advance (due to the forcing technique employing the thermal conditions), is the increased productivity, due to the better conditions of the cultural substrate or of the roots.

The present invention has been disclosed with particular reference to some specific embodiments thereof, but it should be understood that modifications and changes may be made by the persons skilled in the art without departing from the scope of the invention as defined in the appended claims.

## Claims

1. A container for protected horti-floriculture according to the "soilless" technique having a shape which is cylindrical, prismatic, frusto-pyramidal or frusto-conical tapered toward the bottom, made of a material opaque to light and comprising a jacket-shaped air-gap (2) extending around the external surface of the container, air-tight closed and provided with passage holes for the inlet and outlet of a thermal carrier fluid for the thermal conditioning of a culture medium housed in the said container, one or more holes (8) passing through said jacket-shaped air gap (2) being provided at the bottom of the container for the drainage or the absorption of water or nutrient solution to or from the exterior of the container.

2. A container according to claim 1, wherein said passage holes for the inlet and outlet of said thermal carrier fluid are two, in diametrically opposite positions close to the upper edge of the external wall (4) of the said container.

3. A container according to claims 1 or 2, made of a thermoplastic polymeric material.

4. A container according to claim 3, wherein said thermoplastic polymeric material is high density linear polyethylene.

5. A container according to claim 3, wherein each one of said passage holes for the inlet and outlet of a thermal carrier fluid is provided with a cylindrical sleeve (5) insert made of metallic material, fixedly embedded in the polymeric material of the said container.

6. A container according to claim 5, wherein said cylindrical sleeve (5) is made of cupper or brass, and is internally threaded.

7. A container according to any one of claims 1-6, consisting of a pot (1) having a frusto-conical shape tapered toward the bottom

8. A container according to any one of claims 2-7, wherein said jacket-shaped air-gap (2) is divided in two sectors by two baffles (10), which close longitudinally the port for the passage of the thermal carrier fluid within the said jacket-shaped air-gap (2), said baffles (10) being placed in diametrically opposite positions around the external surface (4) of the container and being equidistant from said two passage holes for the inlet and outlet of said thermal carrier fluid

9. A container according to claim 8 also comprising, at a fixed position on the internal wall of said jacket-shaped air-gap, on the side facing the internal wall (3) of said container and corresponding to each of said two passage holes for the inlet and outlet of the thermal carrier fluid, a flow deflection baffle (7) having an edge with longitudinal position and transversally placed with respect to a fluid flowing through the said passage hole.

10. A container according to any one of claims 1-9, also comprising two or more longitudinal stiffening grooves (11) on the internal wall (3) of the said container, placed at equidistant positions from each other around the internal wall (3) of the container.

11. A container according to any one of claims 3-10, obtainable by rotational moulding from a thermoplastic polymeric material.

12. A container according to any one of claims 1-22 comprising, in addition, a hole on the external bottom wall of said jacket-shaped air-gap, said hole being provided with a cylindrical sleeve (9) insert and air-tight closed with a cap.
